# EUROPEAN PATENT APPLICATION

(11) **EP 4 415 216 A1**
(43) Date of publication of application: **14.08.2024**
(21) Application number: 24156417.8
(22) Date of filing: 07.02.2024
(51) Int. Cl.: H02J 7/00, B64D 27/24

(54) **SYSTEM AND METHOD FOR CONTROLLING AN AIRCRAFT BATTERY ASSEMBLY**

(30) Priority: 07.02.2023 US 202363443884 P
(71) Applicant: PRATT & WHITNEY CANADA CORP., Longueuil, Québec J4G 1A1 (CA)
(72) Inventor: ROBACHE, Remi, (01BE5) Longueuil, J4G 1A1 (CA); SHENOUDA, Antwan, (01BE5) Longueuil, J4G 1A1 (CA); FREER, Richard, (01BE5) Longueuil, J4G 1A1 (CA); LAM, Simon, (01BE5) Longueuil, J4G 1A1 (CA); GARIEPY, Raphael, (01BE5) Longueuil, J4G 1A1 (CA); KHARAL, Fraz Ahmad, (01BE5) Longueuil, J4G 1A1 (CA)
(74) Representative: Dehns

(57) **Abstract**

An assembly (68) for an aircraft (1000) includes an aircraft electrical distribution bus (66), a battery (70), and a battery monitoring system (72). The battery includes a plurality of battery strings (80) and a main battery contactor (98). The plurality of battery strings are electrically connected in parallel and each includes a string contactor that (90,92) is positionable in a closed string position or an open string position. The main battery contactor (98) is electrically connected in series with the string contactor of each battery string and is positionable in a closed battery position or an open battery position. The battery monitoring system is configured to control a position of the string contactor of each battery string. Control of a position of the main battery contactor in the closed battery position and the open battery position is independent of the battery monitoring system.

## Description

### TECHNICAL FIELD

This invention relates generally to aircraft batteries and, more particularly, to systems and methods for controlling an aircraft battery including a plurality of battery strings electrically connected in parallel.

### BACKGROUND OF THE ART

Aircraft may include one or more batteries for supplying electrical power for an electrical distribution system of the aircraft and/or its propulsion system(s). The electrical connection of the battery to the electrical distribution system may, under some conditions, be controlled to electrically isolate the one or more batteries from the electrical distribution system. Various systems and methods for controlling aircraft batteries are known in the art. While these known systems and methods have various advantages, there is still room in the art for improvement.

### SUMMARY

It should be understood that any or all of the features or embodiments described herein can be used or combined in any combination with each and every other feature or embodiment described herein unless expressly noted otherwise.

According to an aspect of the present invention, an assembly for an aircraft includes an aircraft electrical distribution bus, a battery, and a battery monitoring system. The battery includes a plurality of battery strings and a main battery contactor. The plurality of battery strings are electrically connected in parallel. Each battery string includes a string contactor. The string contactor is positionable in a closed string position or an open string position. The string contactor in the closed string position is configured to direct electrical power from the respective battery string to the aircraft electrical distribution bus. The string contactor in the open string position is configured to electrically isolate the respective battery string from the aircraft electrical distribution bus. The main battery contactor is electrically connected in series with the string contactor of each battery string. The main battery contactor is positionable in a closed battery position or an open battery position. The main battery contactor in the closed battery position is configured to direct electrical power from the battery to the aircraft electrical distribution bus. The main battery contactor in the open battery position is configured to electrically isolate the battery from the aircraft electrical distribution bus. The battery monitoring system is in signal communication with the string contactor of each battery string. The battery monitoring system is configured to control a position of the string contactor of each battery string in the closed string position or the open string position. Control of a position of the main battery contactor in the closed battery position and the open battery position is independent of the battery monitoring system.

In any of the aspects or embodiments described above and herein, the string contactor of each battery string may be configured as a normally-open string contactor.

In any of the aspects or embodiments described above and herein, the string contactor of each battery string may be configured as a normally-closed string contactor.

In any of the aspects or embodiments described above and herein, the main battery contactor may be configured as a normally-open string contactor.

In any of the aspects or embodiments described above and herein, each battery string may include a plurality of battery modules electrically connected in series.

According to another aspect of the present invention, a method for operating a battery assembly for an aircraft includes supplying electrical power to an aircraft electrical distribution bus with a battery. The battery includes a plurality of battery strings and a main battery contactor. Each battery string includes a string contactor electrically connected in series with the main battery contactor. The method further includes detecting a fault in the battery or the aircraft electrical distribution bus and opening the main battery contactor, in response to the detected fault, with the string contactor for each battery string of the plurality of battery strings remaining in the closed string position.

In any of the aspects or embodiments described above and herein, the method may further include opening the string contactor of each battery string subsequent to opening the main battery contactor.

In any of the aspects or embodiments described above and herein, the string contactor of each battery string may be positionable in a closed string position or an open string position and a position of the string contactor of each battery string in the closed string position or the open string position may be controlled by a battery monitoring system of the battery assembly.

In any of the aspects or embodiments described above and herein, the main battery contactor is positionable in a closed battery position or an open battery position and a position of the main battery contactor in the closed battery position and the open battery position is controlled independent of the battery monitoring system.

In any of the aspects or embodiments described above and herein, the plurality of battery strings may be electrically connected in parallel.

In any of the aspects or embodiments described above and herein, the string contactor of each battery string may be configured as a normally-open string contactor.

In any of the aspects or embodiments described above and herein, the string contactor of each battery string may be configured as a normally-closed string contactor.

In any of the aspects or embodiments described above and herein, the main battery contactor may be configured as a normally-open string contactor.

In any of the aspects or embodiments described above and herein, detecting the fault may include detecting the fault in a first battery string of the plurality of batter strings.

In any of the aspects or embodiments described above and herein, detecting the fault may include detecting the fault in the aircraft electrical distribution bus.

According to another aspect of the present invention, an assembly for an aircraft includes an aircraft electrical distribution bus, an aircraft propulsion system, a battery, and a battery monitoring system. The aircraft propulsion system includes a rotational assembly. The rotational assembly includes a rotatable shaft and an electric motor. The electric motor is connected in electrical communication with the aircraft electrical distribution bus and is configured to selectively drive the rotatable shaft. The battery includes a plurality of battery strings and a main battery contactor. Each battery string includes a string contactor. The string contactor is positionable in a closed string position or an open string position. The main battery contactor is electrically connected in series with the string contactor of each battery string. The main battery contactor is positionable in a closed battery position or an open battery position. The battery monitoring system is in signal communication with the string contactor of each battery string. The battery monitoring system is configured to control a position of the string contactor of each battery string in the closed string position or the open string position. Control of a position of the main battery contactor in the closed battery position and the open battery position is independent of the battery monitoring system.

In any of the aspects or embodiments described above and herein, the rotational assembly may further include a propeller. The electric motor may be configured to selectively drive the propeller via the rotatable shaft.

In any of the aspects or embodiments described above and herein, the propulsion system may include a gas turbine engine. The gas turbine engine may include the rotational assembly, a second rotational assembly, and a generator. The generator may be connected in electrical communication with the aircraft electrical distribution bus. The second rotational assembly may include a second rotatable shaft, a bladed turbine rotor, and a bladed compressor rotor. The second rotatable shaft may interconnect the bladed turbine rotor and the bladed compressor rotor. The bladed turbine rotor may be configured to drive the generator via the second rotatable shaft.

In any of the aspects or embodiments described above and herein, the assembly may further include a controller connected in signal communication with the main battery contactor. The controller may be configured to control the position of the main battery contactor independent of the battery monitoring system.

In any of the aspects or embodiments described above and herein, the battery monitoring system and the controller may be configured to sequentially control the position of the string contactor of each battery string and the position of the main battery contactor, respectively, for a start sequence or a shutdown sequence for the battery.

The present disclosure, and all its aspects, embodiments and advantages associated therewith will become more readily apparent in view of the detailed description provided below, including the accompanying drawings.

### DESCRIPTION OF THE DRAWINGS

FIG. 1 illustrates a perspective view of a portion of an aircraft including a propulsion system, in accordance with one or more embodiments of the present invention.
FIG. 2 schematically illustrates a side view of an aircraft propulsion system including a gas turbine engine, in accordance with one or more embodiments of the present invention.
FIG. 3 schematically illustrates a portion of a battery assembly including a battery string, in accordance with one or more embodiments of the present invention.
FIG. 4 schematically illustrates a portion of a battery assembly including a plurality of battery strings electrically connected in parallel, in accordance with one or more embodiments of the present invention.
FIG. 5 illustrates a block diagram depicting a method for charging a battery including a plurality of battery strings, in accordance with one or more embodiments of the present invention.
FIG. 6 schematically illustrates a portion of another battery assembly including a plurality of battery strings electrically connected in parallel, in accordance with one or more embodiments of the present invention.

### DETAILED DESCRIPTION

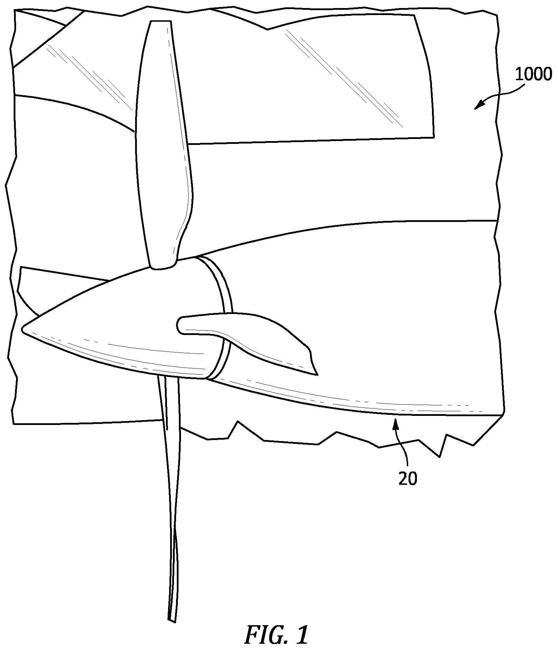

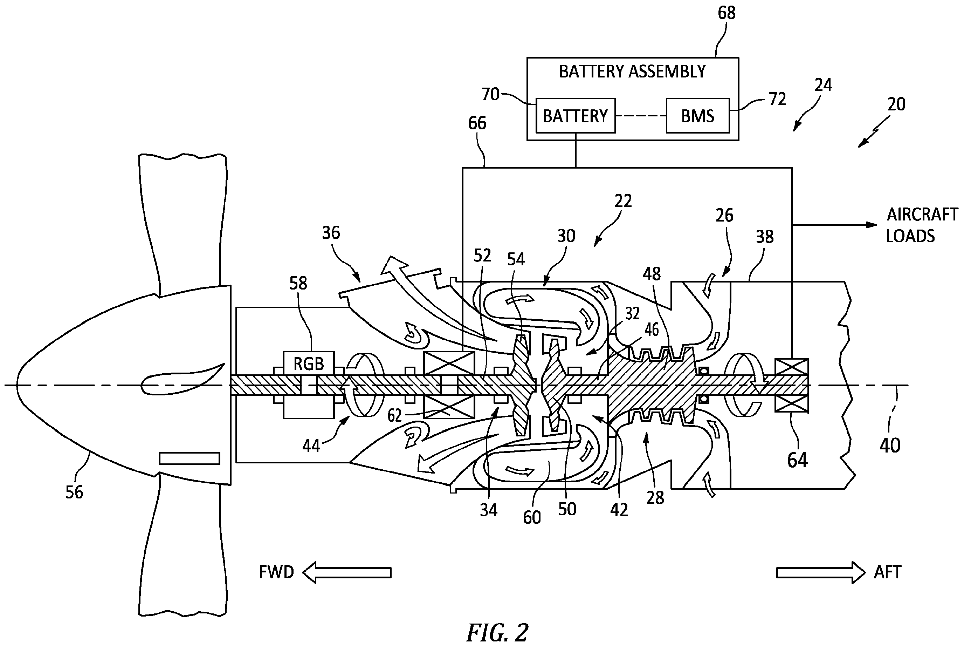

FIGS. 1 and 2 illustrate a propulsion system 20 configured for an aircraft, such as the aircraft 1000 of FIG. 1. Briefly, the aircraft may be a fixed-wing aircraft (e.g., an airplane), a rotary-wing aircraft (e.g., a helicopter), a tilt-rotor aircraft, a tilt-wing aircraft, or any other aerial vehicle. Moreover, the aircraft may be a manned aerial vehicle or an unmanned aerial vehicle (UAV, e.g., a drone). The aircraft propulsion system 20 of FIG. 2 includes a gas turbine engine 22. However, the present invention is also applicable to propulsion systems which do not include gas turbine engines such as, but not limited to, a battery-electric propulsion system (e.g., an electric-motor driven propeller system). The propulsion system 20 additionally includes or is otherwise electrically connected to an electrical distribution system 24.

FIG. 2 illustrates a side, cutaway view of the propulsion system 20 illustrating the gas turbine engine 22 and the electrical distribution system 24. The gas turbine engine 22 of FIG. 2 is configured as a hybrid-electric, multi-spool turboprop gas turbine engine. However, it should be understood that aspects of the present invention may be equally applicable to other configurations of gas turbine engines such as, but not limited to, a turboshaft gas turbine engine, a turboprop gas turbine engine, a turbojet gas turbine engine, a propfan gas turbine engine, an open rotor gas turbine engine, an auxiliary power unit (APU), or the like.

The gas turbine engine 22 of FIG. 2 includes an air inlet 26, a compressor 28, a combustor 30, a high-pressure turbine 32, a power turbine 34, an exhaust 36, and an engine static structure 38. The air inlet 26, the compressor 28, the combustor 30, the high-pressure turbine 32, the power turbine 34, and the exhaust 36 are arranged sequentially along an axial centerline 40 (e.g., a rotational axis) of the gas turbine engine 22. The engine static structure 38 may include, for example, one or more engine cases for the gas turbine engine 22. The engine static structure 38 may additionally include cowlings, bearing assemblies, and/or other structural components of the gas turbine engine 22. The one or more engine cases form, house, and/or structurally support one or more of the air inlet 26, the compressor 28, the combustor 30, the high-pressure turbine 32, the power turbine 34, and the exhaust 36.

Components of the gas turbine engine 22 of FIG. 2, such as components of the compressor 28, the high-pressure turbine 32, and the power turbine 34, are arranged as a first rotational assembly 42 (e.g., a high-pressure spool) and a second rotational assembly 44 (e.g., a power spool). The first rotational assembly 42 and the second rotational assembly 44 are mounted for rotation about the axial centerline 40 relative to the engine static structure 38. The gas turbine engine 22 of FIG. 2 has a "free turbine" configuration in which power for aircraft propulsion is extracted by the second rotational assembly 44 downstream of (e.g., from the exhaust of) the first rotational assembly 42. The present invention, however, is not limited to free turbine gas turbine engine configurations.

The first rotational assembly 42 includes a first shaft 46, a bladed compressor rotor 48 for the compressor 28, and a bladed turbine rotor 50 for the high-pressure turbine 32. The first shaft 46 interconnects the bladed compressor rotor 48 and the bladed turbine rotor 50. The second rotational assembly 44 includes a second shaft 52, a bladed power turbine rotor 54 for the power turbine 34, and a propeller 56. The second shaft 52 is connected to the bladed power turbine rotor 54. The second shaft 52 may be directly or indirectly connected to the propeller 56. For example, the second shaft 52 may be configured to rotatably drive the propeller 56 via a reduction gear box (RGB) 58. The second rotation assembly 44 may include additional components (e.g., a propeller input shaft) for interconnecting the second shaft 52 with the bladed power turbine rotor 54 and the propeller 56. The RGB 58 may be configured to drive the propeller 56 at a reduced rotational speed relative to the second shaft 52. Alternatively, the second shaft 52 may directly interconnect the bladed power turbine rotor 54 and the propeller 56.

During operation of the gas turbine engine 22 of FIG. 2, ambient air enters the gas turbine engine 22 through the air inlet 26 and is directed into the compressor 28. The ambient air is compressed by the bladed compressor rotor 48 and directed into a combustion chamber 60 of the combustor 30. Fuel is injected into the combustion chamber 60 and mixed with the compressed air to provide a fuel-air mixture. This fuel-air mixture is ignited, and combustion products thereof flow through and sequentially cause the bladed turbine rotor 50 and the bladed power turbine rotor 54 to rotate. The rotation of the bladed turbine rotor 50 and the bladed power turbine rotor 54 respectively drive rotation of the first rotational assembly 42 and the second rotational assembly 44. Rotation of the second rotational assembly 44 further drives rotation of the propeller 56 to provide propulsion (e.g., thrust) for the propulsion system 20 and the aircraft 1000 (see FIG. 1). Combustion exhaust gas flowing past the bladed power turbine rotor 54 along is directed out of the gas turbine engine 22 through the exhaust 36.

The electrical distribution system 24 of FIG. 2 is configured to supply electrical power for electrical loads of the propulsion system 20 and/or the aircraft 1000 (see FIG. 1). Examples of electrical loads for the aircraft 1000 include, but are not limited to, electronic control systems, environmental control systems, electric motors, lighting systems, communication systems, and the like. The electrical distribution system 24 of FIG. 2 includes an electric motor 62, a generator 64, an electrical distribution bus 66, and a battery assembly 68. The present disclosure, however, is not limited to the particular configuration of the electrical distribution system 24 of FIG. 2.

The electric motor 62 is configured to apply a rotational force to second rotational assembly 44. For example, the electric motor 62 may be directly or indirectly coupled to the second shaft 52 to drive the second shaft 52 by applying a rotational force to the second shaft 52. The electric motor 62 may further include a clutch configured to selectively couple the electric motor 62 to the second shaft 52 or to an intermediate component of the second rotational assembly 44. Accordingly, the electric motor 62 may be configured to apply a rotational force to the second rotational assembly 44 to facilitate rotation of the propeller 56 by the second rotational assembly 44. For example, the electric motor 62 in combination with the bladed power turbine rotor 54 may provide the rotational force for driving the propeller 56. The electric motor 62 may be selected to be sufficiently powerful to drive the propeller 56 during all flight conditions independent of the bladed power turbine rotor 54. Accordingly, the electric motor 62 may provide all of the rotational force for driving the propeller 56. The electric motor 62 is electrically connected to the electrical distribution bus 66 and configured to receive electrical power from the electrical distribution bus 66 for operation of the electric motor 62.

The generator 64 is configured to supply electrical power to the electrical distribution system 24. The generator 64 of FIG. 2 is operably coupled to the first shaft 46. For example, the generator 64 may be operably coupled to the first shaft 46 by an accessory gear box (not shown) or other speed-reducing gear assembly. The first shaft 46 drives rotation of the generator 64 to generate electrical power for the electrical distribution system 24. The generator 64 is connected in electrical communication with the electrical distribution bus 66 to supply electrical power to the electrical distribution bus 66 for electrical loads of the propulsion system 20 and/or the aircraft 1000 (see FIG. 1). The present disclosure is not limited to the particular generator 64 configuration of FIG. 2. For example, the generator 64 may alternatively be operably coupled to and driven by the second shaft 52. Moreover, electrical power for the electrical distribution system 24 may additionally or alternatively be provided by other electrical power sources which are independent of the propulsion system 20 such as, but not limited to, a generator of another propulsion system (e.g., for multi-propulsion-system aircraft), an auxiliary power unit (APU), a fuel cell (e.g., hydrogen fuel cell) assembly, or another power source disposed on the aircraft 1000 or otherwise outside of the propulsion system 20, and/or a ground-based power supply (e.g., an airport electrical distribution system, generator, or other electrical power supply or battery charging device) external to the aircraft 1000.

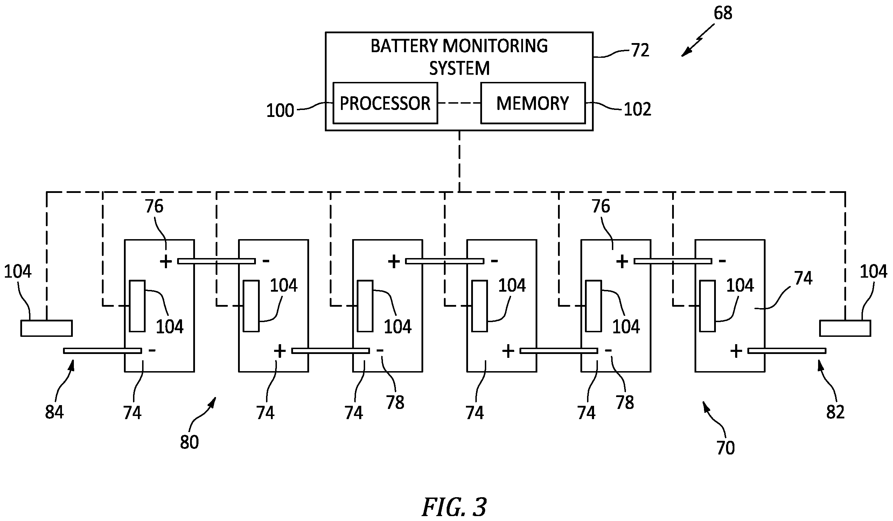

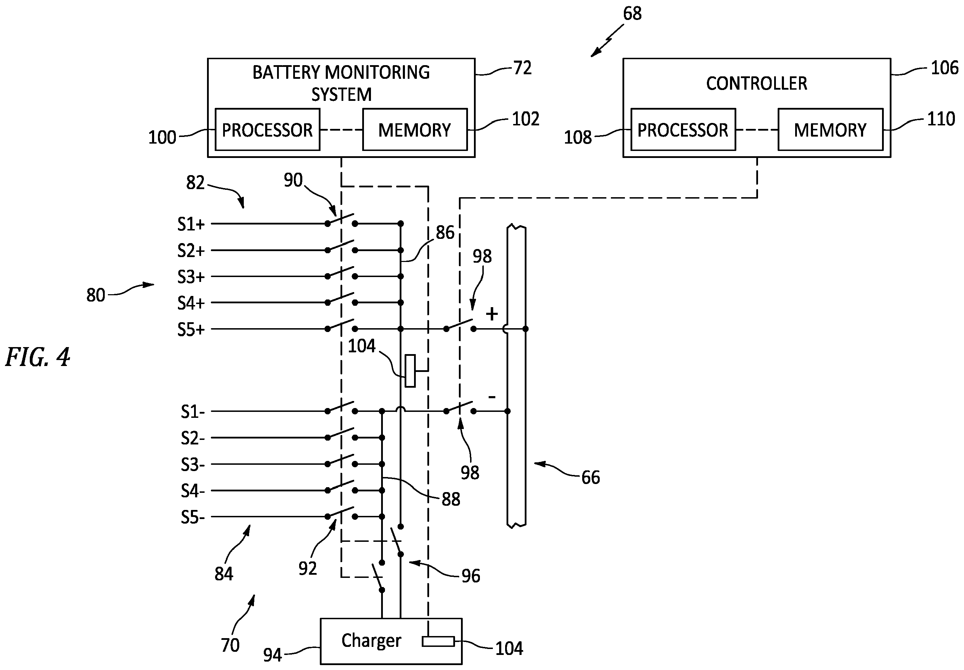

Referring to FIGS. 3 and 4, the battery assembly 68 includes a battery 70 and a battery monitoring system (BMS) 72. The battery 70 is configured to selectively supply electrical power to the electrical distribution bus 66 independently (e.g., as a single power source for the electrical distribution bus 66) or in combination with the generator 64 and/or other power sources. The battery 70 may be disposed, for example, in the aircraft 1000 and/or its propulsion systems 20. The battery 70 of FIG. 3 includes a plurality of battery modules 74 (e.g., battery packs). Each battery module 74 may include a plurality of discrete battery cells electrically connected together (e.g., using series and/or parallel electrical connections) to form the battery module 74. The present disclosure, however, is not limited to this particular configuration of the battery modules 74. The battery modules 74 (e.g., and their battery cells) are configured as rechargeable batteries having battery chemistries such as, but not limited to, lead acid, nickel cadmium (NiCd), nickel-metal hydride (Ni-MH), lithium-ion (Li-ion), lithium-polymer (Li-poly), lithium metal, and the like. Each battery module 74 includes a positive electrode 76 (e.g., an anode) and a negative electrode 78 (e.g., a cathode).

FIG. 3 schematically illustrates a group of the battery modules 74 electrically connected in series to form a battery string 80 of the battery 70. For example, each battery module 74 of the battery string 80 of FIG. 3 is electrically connected in series (e.g., positive to negative or negative to positive) to one or more other battery modules 74 of the battery string 80 of FIG. 3. The battery string 80 includes a positive string terminal 82 and a negative string terminal 84 for connecting the battery string 80 in electrical communication with other portions of the battery 70. The battery string 80 of FIG. 3 includes six (6) battery modules 74 electrically connected in series. The present invention, however, is not limited to any particular number of battery modules 74 for the battery string 80. Moreover, the battery modules 74 of the battery string 80 may be electrically connected together using series and/or parallel electrical connections as necessary to configure the battery string 80 with the desired electrical characteristics (e.g., voltage output, power output, etc.) for the battery string 80.

FIG. 4 schematically illustrates a portion of the battery assembly 68 in which the battery 70 includes a plurality of the battery strings 80. The plurality of battery strings 80 of FIG. 4 includes five (5) battery strings S1-5 electrically connected together in parallel. For example, the positive string terminals 82 (e.g., S1+, S2+, S3+, S4+, S5+) of the battery strings 80 of FIG. 4 are electrically connected together at a positive battery terminal 86 and the negative string terminals 84 (e.g., S1-, S2-, S3-, S4-, S5-) are electrically connected together at a negative battery terminal 88.

Each battery string 80 of FIG. 4 includes a positive string contactor 90 and a negative string contactor 92. The positive string contactor 90 for each battery string 80 is disposed at (e.g., on, adjacent, or proximate) the respective positive string terminal 82 or otherwise electrically between the respective positive string terminal 82 and the positive battery terminal 86. The positive string contactor 90 is selectively positionable in a closed position or an open position. In the closed position, the positive string contactor 90 is configured to convey electrical current between the positive battery terminal 86 and the respective positive string terminal 82. In the open position, the positive string contactor 90 is configured to interrupt (e.g., obstruct, prevent, etc.) electrical current between the positive battery terminal 86 and the respective positive string terminal 82. The negative string contactor 92 for each battery string 80 is disposed at (e.g., on, adjacent, or proximate) the respective negative string terminal 84 or otherwise electrically between the respective negative string terminal 84 and the negative battery terminal 88. The negative string contactor 92 is selectively positionable in a closed position or an open position. In the closed position, the negative string contactor 92 is configured to convey electrical current between the negative battery terminal 88 and the respective negative string terminal 84. In the open position, the negative string contactor 92 is configured to interrupt (e.g., obstruct, prevent, etc.) electrical current between the negative battery terminal 88 and the respective negative string terminal 84. Accordingly, the positive string contactor 90 and the negative string contactor 92 may be controlled to selectively electrically connect or selectively electrically disconnect the respective battery string 80 from the battery terminals 86, 88 and/or the electrical distribution bus 66. The positive string contactor 90 and the negative string contactor 92 may be configured as electrically-controlled relays or switches which may be controlled by an electrical control signal to position the respective positive string contactor 90 and negative string contactor 92 in the closed position or the open position. While each battery string 80 of FIG. 4 includes both the positive string contactor 90 and the negative string contactor 92, the present disclosure is not limited to the use of both the positive string contactor 90 and the negative string contactor 92 for the battery string 80 (e.g., the battery string 80 may include the positive string contactor 90 or the negative string contactor 92). Of course, the battery 70 may alternatively include other selective electrical power interruption devices such as, but not limited to electrical circuit breakers or electrical switches.

The positive string contactor 90 and the negative string contactor 92 may be configured as a normally-open contactor or a normally-closed contactor. A normally-open contactor is configured to be positioned in the open position in response to receipt of the electrical control signal (e.g., from the battery monitoring system 72) by the normally-open contactor. Isolation or interruption of the electrical control signal (e.g., by the battery monitoring system 72) to the normally-open contactor may cause the normally-open contactor to reposition to the closed position. In contrast, a normally-closed contactor is configured to be positioned and maintained in the closed position in response to receipt of the electrical control signal (e.g., from the battery monitoring system 72) by the normally-closed contactor. Isolation or interruption of the electrical control signal (e.g., by the battery monitoring system 72) to the normally-closed contactor may cause the normally-closed contactor to reposition to the open position.

The battery 70 of FIG. 4 further includes a charger 94, main charger contactors 96 (e.g., a positive contactor and a negative contactor), and main battery contactors 98 (e.g., a positive contactor and a negative contactor). The charger 94 is an electrical power source configured to supply electrical power to the battery terminals 86, 88 for charging one or more of the battery strings 80 (e.g., the battery strings S1, S2, S3, S4, and/or S5 of FIG. 4). The charger 94 may be formed by or may otherwise include one or more electrical power sources such as, but not limited to, the generator 64, a generator of another propulsion system (e.g., for multi-propulsion-system aircraft), an auxiliary power unit (APU), a fuel cell (e.g., hydrogen fuel cell) assembly, or another power source disposed on the aircraft 1000 or otherwise outside of the propulsion system 20, and/or a ground-based power supply (e.g., an airport electrical distribution system, generator, or other electrical power supply or battery charging device) external to the aircraft 1000. The main charger contactors 96 are configured to selectively connect the charger 94 in electrical communication with the battery 70 (e.g., with the positive battery terminal 86 and the negative battery terminal 88). The main battery contactors 98 are configured to selectively connect the electrical distribution bus 66 in electrical communication with the battery 70 (e.g., with the positive battery terminal 86 and the negative battery terminal 88). Each of the main charger contactors 96 and the main battery contactors 98 is selectively positionable in a closed position or an open position. In the closed position, each of the main charger contactors 96 and the main battery contactors 98 is configured to convey electrical current. In the open position, each of the main charger contactors 96 and the main battery contactors 98 is configured to interrupt (e.g., obstruct, prevent, etc.) electrical current. The main charger contactors 96 and the main battery contactors 98 may be configured as electrically-controlled relays or switches which may be controlled by an electrical control signal to position the main charger contactors 96 and the main battery contactors 98 in their respective closed position or open position. While the battery 70 of FIG. 4 includes two main battery contactors 98 (e.g., a positive contactor and a negative contactor), the present disclosure is not limited to the use of both a positive main battery contactor 98 and a negative main battery contactor 98 for the battery 70 (e.g., the battery 70 may include a positive main battery contactor 98 or a negative main battery contactor 98).

The main battery contactors 98 are connected in electrical communication (e.g., signal communication) with a controller 106. The controller 106 includes a processor 108 and memory 110. The memory 110 is in signal communication with the processor 108. The processor 108 may include any type of computing device, computational circuit, or any type of process or processing circuit capable of executing a series of instructions that are stored in the memory 110, thereby causing the processor 108 to perform or control one or more steps or other processes. The processor 108 may include multiple processors and/or multicore CPUs and may include any type of processor, such as a microprocessor, digital signal processor, co-processors, a microcontroller, a microcomputer, a central processing unit, a field programmable gate array, a programmable logic device, a state machine, logic circuitry, analog circuitry, digital circuitry, etc., and any combination thereof. The instructions stored in memory 110 may represent one or more algorithms for controlling and/or monitoring aspects of the propulsion system 20, the gas turbine engine 24, the electrical distribution system 24, and/or the battery assembly 68, and the stored instructions are not limited to any particular form (e.g., program files, system data, buffers, drivers, utilities, system programs, etc.) provided they can be executed by the processor 108. The memory 110 may be a non-transitory computer readable storage medium configured to store instructions that when executed by one or more processors, cause the one or more processors to perform or cause the performance of certain functions. The memory 110 may be a single memory device or a plurality of memory devices. A memory device may include a storage area network, network attached storage, as well a disk drive, a read-only memory, random access memory, volatile memory, non-volatile memory, static memory, dynamic memory, flash memory, cache memory, and/or any device that stores digital information. One skilled in the art will appreciate, based on a review of this disclosure, that the implementation of the controller 106 may be achieved via the use of hardware, software, firmware, or any combination thereof. The controller 106 may also include input and output devices (e.g., keyboards, buttons, switches, touch screens, video monitors, sensor readouts, data ports, etc.) that enable the operator to input instructions, receive data, etc.

The controller 106 controls the main battery contactors 98 for positioning in their respective open positions or closed positions using the electrical control signal (e.g., an electrical control current, electronic signal, etc.). Operation of the controller 106 to effect positioning of the main battery contactors 98 in the open position or the closed position may be performed manually (e.g., by a pilot or other operator). For example, a pilot or other operator may effect positioning (e.g., controlled by the controller 106) of the main battery contactors 98 in the open position using an override switch. Alternatively, operation of the controller 106 to effect positioning of the main battery contactors 98 in the open position or the closed position may be performed automatically (e.g., by the controller 106 through execution of the instructions stored in memory 110). The controller 106 is configured to control the positions of the main battery contactors 98 in the closed position and the open position independent of the battery monitoring system 72.

The controller 106 may be formed by or otherwise part of an electronic engine controller (EEC) for the propulsion system 20 or its gas turbine engine 22. The EEC may control operating parameters of the gas turbine engine 22 such as, but not limited to, fuel flow, stator vane position (e.g., variable compressor inlet guide vane (IGV) position), compressor air bleed valve position, propeller rotation speed, propeller blade pitch, etc. so as to control an engine power and/or thrust of the propulsion system 20 or its gas turbine engine 22. The EEC may be part of a full authority digital engine control (FADEC) system for the propulsion system 20. Alternatively, the controller 106 may be a discrete controller directed to operation of the main battery contactors 98 (e.g., only for operation of the main battery contactors 98). The controller 106 may alternatively be formed by or otherwise part of another electronic control unit (ECU) for the propulsion system 20 or the aircraft 1000. The controller 106 may alternatively be formed by the battery monitoring system 72 where the battery monitoring system 72 is configured with multiple channels (e.g., multiple independent control systems). For example, a first channel of the battery monitoring system 72 may control positions of the string contactors 90, 92 while an independent second channel of the battery monitoring system 72 may control positions of the main battery contactors 98. The main battery contactors 98 may be configured as normally-open contactors or normally-closed contactors. In some embodiments, the string contactors 90, 92 for each battery string 80 of the plurality of battery strings 80 may be normally-closed contactors and the main battery contactors 98 may be normally-open contactors. In this configuration, with the battery 70 off service (e.g., electrically isolated from the electrical distribution bus 66) and the main battery contactors 98 open, the closed string contactors 90, 92 may allow string voltages V_{STRING} of the plurality of battery strings 80 to remain equalized or substantially equalized by maintaining the plurality of battery strings 80 electrically connected in parallel.

The battery monitoring system 72 of FIGS. 2-4 includes a processor 100 and memory 102. The memory 102 is in signal communication with the processor 100. The processor 100 may include any type of computing device, computational circuit, or any type of process or processing circuit capable of executing a series of instructions that are stored in the memory 102, thereby causing the processor 100 to perform or control one or more steps or other processes. The processor 100 may include multiple processors and/or multicore CPUs and may include any type of processor, such as a microprocessor, digital signal processor, co-processors, a microcontroller, a microcomputer, a central processing unit, a field programmable gate array, a programmable logic device, a state machine, logic circuitry, analog circuitry, digital circuitry, etc., and any combination thereof. The instructions stored in memory 102 may represent one or more algorithms for controlling and/or monitoring aspects of the battery assembly 68, and the stored instructions are not limited to any particular form (e.g., program files, system data, buffers, drivers, utilities, system programs, etc.) provided they can be executed by the processor 100. The memory 102 may be a non-transitory computer readable storage medium configured to store instructions that when executed by one or more processors, cause the one or more processors to perform or cause the performance of certain functions. The memory 102 may be a single memory device or a plurality of memory devices. A memory device may include a storage area network, network attached storage, as well a disk drive, a read-only memory, random access memory, volatile memory, non-volatile memory, static memory, dynamic memory, flash memory, cache memory, and/or any device that stores digital information. One skilled in the art will appreciate, based on a review of this disclosure, that the implementation of the battery monitoring system 72 may be achieved via the use of hardware, software, firmware, or any combination thereof. The battery monitoring system 72 may also include input and output devices (e.g., keyboards, buttons, switches, touch screens, video monitors, sensor readouts, data ports, etc.) that enable the operator to input instructions, receive data, etc.

The battery monitoring system 72 includes a plurality of sensors 104 to monitor operational parameters of the battery 70 including, but not limited to, voltage, current, temperature, electric arc detection, fire detection, and the like. For example, the battery monitoring system 72 may include one or more of the sensors 104 at (e.g., on, adjacent, or proximate) each battery module 74 to monitor the health of each battery module 74 and or to monitor operational parameters of each battery module 74 such as, but not limited to, voltage, current, and temperature. The battery monitoring system 72 may additionally include one or more sensors 104 for monitoring voltage and current parameters for each battery string 80, for the battery 70 (e.g., at the battery terminals 86, 88), and/or for the charger 94.

The battery monitoring system 72 is connected in electrical communication (e.g., signal communication) with the string contactors 90, 92. The battery monitoring system 72 may control the string contactors 90, 92 for positioning in their respective open positions or closed positions using the electrical control signal (e.g., an electrical control current, electronic signal, etc.). Similarly, the battery monitoring system 72 may be in electrical communication (e.g., signal communication) with the main charger contactors 96 control the main charger contactors 96 their respective open positions or closed positions. As previously discussed, the controller 106 is configured to control the positions of the main battery contactors 98 in the closed position or the open position independent of the battery monitoring system 72. In other words, the battery monitoring system 72 of FIG. 4 is not configured for (e.g., not capable of) controlling the positions of the main battery contactors 98 in the closed position or the open position.

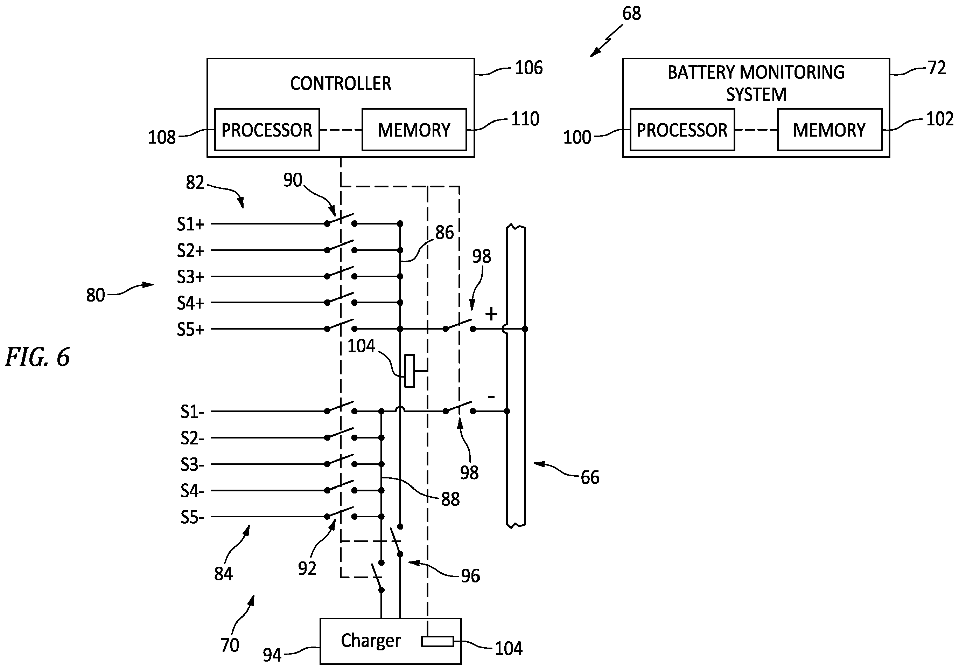

FIG. 6 illustrates an alternative control configuration for the battery assembly 68. Like FIG. 4, FIG. 6 schematically illustrates a portion of the battery assembly 68 in which the battery 70 includes a plurality of the battery strings 80. The controller 106 of FIG. 6 is connected in electrical communication (e.g., signal communication) with the string contactors 90, 92 and the main battery contactors 98. The controller 106 of FIG. 6 is configured to control the string contactors 90, 92 and the main battery contactors 98 in their respective open positions or closed positions using the electrical control signal (e.g., an electrical control current, electronic signal, etc.). The battery monitoring system 72 may monitor battery operational parameters and control various aspects of the battery assembly 68 operation (e.g., battery charging), as previously discussed.

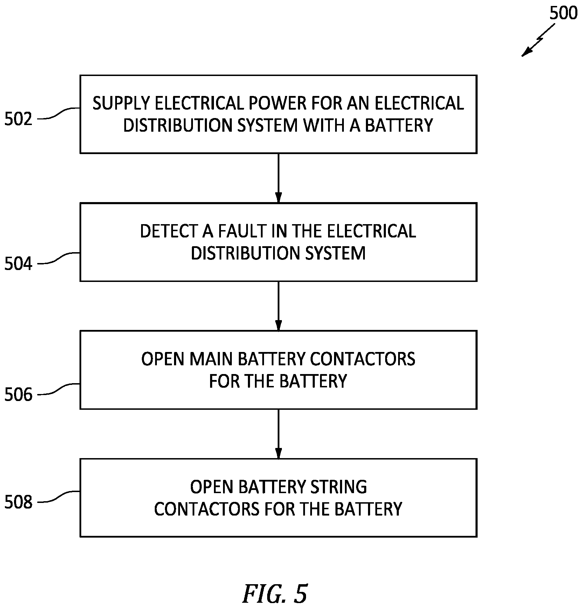

Referring to FIGS. 4 and 5, a Method 500 for isolating a battery from an electrical distribution bus is provided. FIG. 5 illustrates a flowchart for the Method 500. The Method 500 may be performed for the battery assembly 68, as described herein. The battery monitoring system 72 and/or the controller 106 may be used to execute or control one or more steps of the Method 500 for the battery assembly 68. For example, the processor 100 may execute instructions stored in memory 102, thereby causing the battery monitoring system 72 and/or its processor 100 to execute or otherwise control one or more steps of the Method 500. However, it should be understood that the Method 500 is not limited to use with the battery assembly 68 described herein. Unless otherwise noted herein, it should be understood that the steps of Method 500 are not required to be performed in the specific sequence in which they are discussed below and, in some embodiments, the steps of Method 500 may be performed separately or simultaneously.

Step 502 includes supplying electrical power to the electrical distribution bus 66 with the battery 70. For example, the one or more battery strings 80 (e.g., on-service battery strings) of the plurality of battery strings 80 may be electrically connected to the electrical distribution bus 66 with the main battery contactors 98 and the string contactors 90, 92 for the one or more battery strings 80 of the plurality of battery strings 80 in the closed position.

Step 504 includes detecting a fault (e.g., electrical faults) in the electrical distribution system 24. For example, Step 504 may include detecting a fault in the battery 70 (e.g., in a battery module 74, a battery string 80, etc.), the electrical distribution bus 66, or another portion of the electrical distribution system 24. The battery monitoring system 72, the controller 106, and/or another system of the electrical distribution system 24 (see FIG. 2) may detect or otherwise identify the fault. For example, the battery monitoring system 72 may detect the fault based on electrical distribution bus 66 and/or battery assembly 68 parameters measured by the plurality of sensors 104. Examples of faults include, but are not limited to, an electric arc (e.g., an arc discharge), an electrical current spike, a short circuit condition electrically downstream of the battery 70 (e.g., in the electrical distribution bus 66 or an electrical load of the electrical distribution bus 66), high battery module 72 temperature, and fire (e.g., electrical fire).

Step 506 includes opening the main battery contactors 98 in response to the detected fault (see Step 504) to electrically isolate the battery 70 from the electrical distribution bus 66. The main battery contactors 98 positioned in their open positions by the controller 106 prior to the string contactors 90, 92 for each battery string 80 (e.g., each on-service battery string) being positioned in their open positions. In other words, the main battery contactors 98 are positioned in their open positions with the string contactors 90, 92 for each battery string 80 (e.g., each on-service battery string) remaining in the closed position. The sequence of opening the main battery contactors 98 prior to the string contactors 90, 92 may prevent damage to the string contactors 90, 92 which might otherwise result from time latency for the opening of various string contactors 90, 92. As an example with reference to FIG. 4, if the string contactors 90, 92 for the battery strings S1-3 open before the string contactors 90, 92 for the battery strings S4-5, and with the main battery contactors 98 in their shut positions, the string contactors 90, 92 for the battery strings S4-5 may carry the full electrical current load for the battery 70, which full current load may exceed a rated current load for the affected string contactors 90, 92. Accordingly, by positioning the main battery contactors 98 in their open positions, the electrical current load for the battery may be interrupted prior to opening the string contactors 90, 92 for the plurality of battery strings 80.

This sequence of Step 506 may facilitate protection of the string contactors 90, 92 when isolating the battery 70 from the electrical distribution bus 66 in response to a detected fault. For example, the battery monitoring system 72 may be configured to reposition the string contactors 90, 92 from the closed position to the open position only when electrical current from the respective battery string 80 is zero or near zero (e.g., a no-load condition for the battery string 80). Alternatively, the string contactors 90, 92 may be controlled (e.g., by the battery monitoring system 72, the controller 106, or through coordination of the battery monitoring system 72 with the controller 106) to reposition the string contactors 90, 92 from the closed position to the open position only after a delay (e.g., a predetermined time delay) following positioning of the main battery contactors 98 are positioned in their open positions. In other words, the string contactors 90, 92 may not be configured to interrupt the electrical current that the respective battery string 80 is supplying to the electrical distribution bus 66. An attempt to interrupt the electrical current from the battery string 80 using its respective string contactors 90, 92 may cause or increase the likelihood of damage to the string contactors 90, 92. In contrast to the string contactors 90, 92, the main battery contactors 98 may be configured to interrupt the full electrical current (e.g., design current) of the battery 70 without a substantial likelihood of damage to the main battery contactors 98. This configuration of the main battery contactors 98 and the string contactors 90, 92 may facilitate the use of smaller, lower-cost electrical contactors to be used for the string contactors 90, 92. As previously discussed, the controller 106 is configured to control the positions of the main battery contactors 98 in the closed position or the open position independent of the battery monitoring system 72. This independent control configuration of the controller 106 and the main battery contactors 98 facilitates control of the main battery contactors 98 such that any system faults which may be present in the battery monitoring system 72 will not affect control of the main battery contactors 98 interrupt battery 70 electrical current prior to battery monitoring system 72 control of the string contactors 90, 92 to position the string contactors 90, 92 in their open positions. Moreover, the controller 106 used for controlling positions of the main battery contactors 98 may be configured with a shorter response time (e.g., time to open the main battery contactors 98) relative to the battery monitoring system 72, thereby improving response time for isolating the battery 70 from the electrical distribution bus 66 in response to a detected fault.

Step 508 may include opening the string contactors 90, 92 for each battery string 80 of the plurality of battery strings 80. For example, the battery monitoring system 72 may control each string contactor 90, 92 to position each string contactor 90, 92 in its open position.

The battery monitoring system 72 and/or the controller 106 may additionally control sequential operations of the string contactors 90, 92 and the main battery contactors 98 during one or more other battery assembly 68 operations. For example, the battery monitoring system 72 and/or the controller 106 may control positions of the string contactors 90, 92 and the main battery contactors 98 for a start sequence and/or a shutdown sequence for the battery assembly 68. During a start sequence, the battery monitoring system 72 and/or the controller 106 may sequentially control positions of the string contactors 90, 92 and the main battery contactors 98 to electrically connect one or more of the battery strings 80 with the electrical distribution bus 66, where the battery 70 is initially electrically disconnected from the electrical distribution bus 66. For example, the battery monitoring system 72 may control each of the string contactors 90, 92 in the closed position for the battery strings 80 which will be electrically connected with the electrical distribution bus 66. The controller 106 may subsequently control the main battery contactors 98 in the closed position to complete the electrical connection between the battery 70 and the electrical distribution bus 66. Prior to controlling the main battery contactors 98 position, the controller 106 may verify a position of the string contactors 90, 92 to ensure that a rated current load for the affected string contactors 90, 92 will not be exceeded by closing the main battery contactors 98. During a shutdown sequence, the battery monitoring system 72 and/or the controller 106 may sequentially control positions of the string contactors 90, 92 and the main battery contactors 98 to electrically disconnect the battery 70 from the electrical distribution bus 66, where the battery 70 is initially electrically connected with the electrical distribution bus 66. For example, the controller 106 may control the main battery contactors 98 in the open position to electrically disconnect the battery 70 from the electrical distribution bus 66. Subsequently, the battery monitoring system 72 may control each of the string contactors 90, 92 in the open position. The string contactors 90, 92 for some or all of the battery strings 80 may be maintained in the closed position by the battery monitoring system 72, for example, to facilitate charging of the battery strings 80 or to facilitate equalization of battery voltages of the battery strings 80.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. An assembly (68) for an aircraft (1000), the assembly comprising:
an aircraft electrical distribution bus (66);
a battery (70) including a plurality of battery strings (80) and a main battery contactor (98), the plurality of battery strings electrically connected in parallel, each battery string including a string contactor (90,92), the string contactor positionable in a closed string position or an open string position, the string contactor in the closed string position configured to direct electrical power from the respective battery string to the aircraft electrical distribution bus, the string contactor in the open string position configured to electrically isolate the respective battery string from the aircraft electrical distribution bus, and the main battery contactor electrically connected in series with the string contactor of each battery string, the main battery contactor positionable in a closed battery position or an open battery position, the main battery contactor in the closed battery position configured to direct electrical power from the battery to the aircraft electrical distribution bus, the main battery contactor in the open battery position configured to electrically isolate the battery from the aircraft electrical distribution bus; and
a battery monitoring system (72) in signal communication with the string contactor of each battery string, the battery monitoring system configured to control a position of the string contactor of each battery string in the closed string position or the open string position, wherein control of a position of the main battery contactor in the closed battery position and the open battery position is independent of the battery monitoring system.

2. The assembly of claim 1, wherein the string contactor of each battery string is configured as a normally-open string contactor.

3. The assembly of claim 1, wherein the string contactor of each battery string is configured as a normally-closed string contactor, optionally wherein the main battery contactor is configured as a normally-open string contactor.

4. The assembly of any preceding claim, wherein each battery string includes a plurality of battery modules electrically connected in series.

5. A method for operating a battery assembly (68) for an aircraft (1000), the method comprising:
supplying electrical power to an aircraft electrical distribution bus (66) with a battery (70), the battery including a plurality of battery strings (80) and a main battery contactor (98), each battery string including a string contactor (90,92) electrically connected in series with the main battery contactor;
detecting a fault in the battery or the aircraft electrical distribution bus; and
opening the main battery contactor, in response to the detected fault, with the string contactor for each battery string of the plurality of battery strings remaining in the closed string position.

6. The method of claim 5, further comprising opening the string contactor of each battery string subsequent to opening the main battery contactor.

7. The method of claim 5 or 6, wherein the string contactor of each battery string is positionable in a closed string position or an open string position and a position of the string contactor of each battery string in the closed string position or the open string position is controlled by a battery monitoring system of the battery assembly, optionally, wherein the main battery contactor is positionable in a closed battery position or an open battery position and a position of the main battery contactor in the closed battery position and the open battery position is controlled independent of the battery monitoring system.

8. The method of any of claims 5, 6 or 7, wherein the plurality of battery strings are electrically connected in parallel.

9. The method of any of claims 5 to 8, wherein the string contactor of each battery string is configured as:
a normally-open string contactor; or
a normally-closed string contactor.

10. The method of claim 9, wherein the main battery contactor is configured as a normally-open string contactor.

11. The method of any of claims 5 to 10, wherein detecting the fault includes detecting the fault in a first battery string of the plurality of batter strings.

12. The method of any of claims 5 to 10, wherein detecting the fault includes detecting the fault in the aircraft electrical distribution bus.

13. An assembly for an aircraft, the assembly including:
an aircraft electrical distribution bus (66);
an aircraft propulsion system (20) including a rotational assembly (44), the rotational assembly including a rotatable shaft (52) and an electric motor (62), the electric motor connected in electrical communication with the aircraft electrical distribution bus and configured to selectively drive the rotatable shaft;
a battery (70) including a plurality of battery strings (80) and a main battery contactor (98), each battery string including a string contactor (90,92), the string contactor positionable in a closed string position or an open string position, and the main battery contactor (98) electrically connected in series with the string contactor of each battery string, the main battery contactor positionable in a closed battery position or an open battery position; and
a battery monitoring system (72) in signal communication with the string contactor of each battery string, the battery monitoring system configured to control a position of the string contactor of each battery string in the closed string position or the open string position, wherein control of a position of the main battery contactor in the closed battery position and the open battery position is independent of the battery monitoring system, optionally wherein the rotational assembly further includes a propeller, the electric motor configured to selectively drive the propeller via the rotatable shaft.

14. The assembly of claim 13, wherein the propulsion system includes a gas turbine engine, the gas turbine engine including the rotational assembly, a second rotational assembly, and a generator, the generator connected in electrical communication with the aircraft electrical distribution bus, the second rotational assembly including a second rotatable shaft, a bladed turbine rotor, and a bladed compressor rotor, the second rotatable shaft interconnecting the bladed turbine rotor and the bladed compressor rotor, the bladed turbine rotor configured to drive the generator via the second rotatable shaft.

15. The assembly of claim 13 or 14, further comprising a controller connected in signal communication with the main battery contactor, the controller configured to control the position of the main battery contactor independent of the battery monitoring system, optionally, wherein the battery monitoring system and the controller are configured to sequentially control the position of the string contactor of each battery string and the position of the main battery contactor, respectively, for a start sequence or a shutdown sequence for the battery.
